# EUROPÄISCHE PATENTSCHRIFT

(11) **EP 0 656 270 B1**
(45) Veröffentlichungstag und Bekanntmachung des Hinweises auf die Patenterteilung: **11.02.1998**
(21) Anmeldenummer: 94117728.9
(22) Anmeldetag: 10.11.1994
(51) Int. Cl.: B60G 3/26, B60G 15/06, B62D 17/00, B62D 7/18

(54) **Radaufhängung**
Wheel suspension
Suspension de roue

(30) Priorität: 29.11.1993 DE 4340557
(43) Veröffentlichungstag der Anmeldung: 07.06.1995
(73) Patentinhaber: Dr.Ing.h.c. F. Porsche Aktiengesellschaft, 70435 Stuttgart (DE)
(72) Erfinder: Kunert, Reinhard, D-71287 Weissach (DE); Klosterhuber, Robert, D-70439 Stuttgart (DE); Sommerer, Karl, D-75446 Wiernsheim (DE); Schote, Norbert, D-72119 Ammerbuch (DE); Dietz, Matthias, D-74321 Bietigheim-Bissingen (DE); Wahl, Georg, D-75181 Pforzheim (DE)

(56) Entgegenhaltungen:
- EP-A- 0 271 879
- DE-A- 3 843 613
- DE-A- 3 926 665
- DE-A- 3 939 312
- FR-A- 2 645 800
- PATENT ABSTRACTS OF JAPAN vol. 8, no. 28 (M-274) 7. Februar 1984 & JP-A-58 185 308 (NISSAN JIDOSHA KK) 29. Oktober 1983
- J. REIMPELL 'Fahrwerktechnik: Lenkung' 1984 , VOGEL VERLAG , WüRZBURG, DE * Seite 233, Zeile 3, Absatz 6.4 - Zeile 9; Abbildung 6.3.1 *
- PATENT ABSTRACTS OF JAPAN vol. 14, no. 506 (M-1044) 6. November 1990 & JP-A-02 208 167 (FUJI HEAVY IND LTD) 17. August 1990
- DATABASE WPI Week 9128, Derwent Publications Ltd., London, GB; AN 91-207990 & WO-A-91 08918 (YOROZU MFG) 27. Juni 1991
- AUTOMOBILTECHNISCHE ZEITSCHRIFT, Bd.79, Nr.9, September 1977 Seiten 357 - 365 W. MATSCHINSKY ET AL. 'Die Doppelgelenk-Federbeinachse derneuen BMW-Sechszylinderwagen der Baureihe 7'
- ATZ AUTOMOBILTECHNISCHE ZEITSCHRIFT, Bd.95, Nr.11, November 1993 Seiten 552 - 563, XP409584 W. KRONIGER ET AL. 'Das Fahrwerk des neuen Porsche 911 Carrera'
- REVUE TECHNIQUE AUTOMOBILE, Bd.45, Nr.515, Mai 1990, BILLANCOURT, FR Seiten XXIII - XXIV, XP108105 J.M.G. 'Toyota MR. La force de l'équilibre'

## Beschreibung

Die Erfindung bezieht sich auf eine Radaufhängung für eine Achse eines Kraftfahrzeugs, insbesondere für eine Mc-Pherson-Vorderachse nach dem Oberbegriff des Anspruchs 1.

Aus der DE 36 16 005 C2 ist eine Radaufhängung bekannt, bei der ein unterer Querlenker mit seinem einen Ende schwenkbar am Fahrzeugrahmen und mit seinem anderen Ende schwenkbar mit einem Achsschenkel verbunden ist. Mit dem Querlenker ist eine etwa in Längsrichtung verlaufende Strebe starr verbunden, wobei das freie Ende der Strebe am Fahrzeugaufbau elastisch abgestützt ist. Desweiteren ist eine Radaufhängung aus der DE 32 00 855 A1 bekannt, bei der eine Strebe gelenkig mit einem Querlenker verbunden ist.

Aus der DE-A-39 39 312 ist eine Hinterradaufhängung bekannt, die einen unterhalb der Raddrehachse angeordneten Querlenker mit einer beabstandeten Spurstange umfaßt. Oberhalb der Raddrehachse ist an einem Querlenker ein Längslenker angelenkt, der endseitig mit einem weiteren Längslenker verbunden ist, der sich vom unteren Querlenker schräg nach oben erstreckt und der endseitig am Aufbau abgestützt ist. Ferner ist aus der FR-A-26 45 800 eine Radaufhängung bekannt, die zwei an einem Hilfsrahmen angelenkte und parallel zueinander angeordnete Querlenker umfaßt, wobei der eine Querlenker mit einem sich - in bezug auf die Fahrtrichtung - schräg nach vorne innen erstreckenden Längslenker verbunden ist.

Aufgabe der Erfindung ist es, eine Radaufhängung für eine Achse eines Krattfahrzeugs mit einem Mc-Pherson-Federbein zu schaffen, die bei auf das Rad einwirkenden Umfangskräften eine, eine das Fahrverhalten bei Kurven- und Geradeausfahrt gezielte elastokinematische Radstellungsänderung gewährleistet.

Diese Aufgabe ist erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Radaufhängung durch die Lage des Querlenkers mit Zugstrebe zur Spurstange des Lenkgetriebes und der Positionierung des Mc-Pherson-Federbeines zum Querlenker eine gezielte elastokinematische Radstellungsänderung unter der Einwirkung von Kräften auf das Rad erreicht wird, wodurch das Fahrverhalten bei Brems- und Antriebskrätten sowie bei einer Längsfederung vorteilhaft beeinflußbar ist. Vorteilhaft ist es, wenn durch die erfindungsgemäße Radaufhängung beim Bremsen in der Kurve, die Räder sich in Richtung Nachspur verstellen.

So ist der Querlenker mit der verbundenen Zugstrebe in einer etwa horizontalen Ebene angeordnet, wobei der Querlenker sich unterhalb der Raddrehachse etwa in einer Radmittenquerebene erstreckt. Die Zugstrebe ist mit dem Querlenker über ein elastisches Lager verbunden, wobei diese unter einem Winkel schräg zu einer Längsmittenachse des Fahrzeugs angeordnet ist. Der Querlenker ist in Hoch- und Längsrichtung mit Abstand zur Spurstange gelagert.

Um eine Auslenkung des Querlenkers zu erreichen, ist dieser und die Zugstrebe jeweils über ein an einem Fahrschemel gehaltenen elastischen Lager angelenkt. Das Lager der Zugstrebe weist radiale Ausnehmungen auf, die in Achsrichtung der Zugstrebe angeordnet sind. Hierdurch wird in Belastungsrichtung, welche der Achsrichtung der Zugstrebe entspricht, eine weiche Kennung des Lagers erzielt. Das elastische Lager der Zugstrebe mit den radialen Ausnehmungen kann auch im Querlenker angeordnet sein. Das aufbauseitige Lager des Querlenkers ist dagegen radial insgesamt steifer ausgeführt.

Zur Erzielung etwa gleicher Hebelverhältnisse an der Radaufhängung ist der Abstand zwischen den beiden aufbauseitigen Lagern des Querlenkers und der Zugstrebe entsprechend der Länge des Querlenkers zwischen seinen beiden Lagern ausgeführt. Das Verbindungslager zwischen Zugstrebe und Querlenker läßt eine Bewegung zu und weist in radialer Richtung eine weichere Kennung auf als das Lager des Querlenkers. Die Zugstrebe weist zur Verbindung mit dem Verbindungslager am Querlenker einen Gabelkopf auf, der das Lager von beiden Seiten stirnseitig übergreift und zwischen sich lagernd aufnimmt.

Zur Erzielung einer Längsfederung trägt im wesentlichen das aufbauseitige Lager der Zugstrebe mit seinen radialen Ausnehmungen bei. Das Rad kann sich bei der Längsfederung nach hinten und nach vorn - in bezug auf die Fahrtrichtung - um einen ideellen Korrekturpol bewegen. Dieser wird durch die Anstellung des Querlenkers zur Spurstange - in Draufsicht gesehen - gebildet. Der Pol liegt aut der Innenseite des Rades, wodurch sich das Rad bei Bewegung nach hinten in Richtung Nachspur verstellen kann. Bei einer Längsfederung nach vorn, bewegt sich das Rad in Richtung Vorspur. Als Drehpunkt für den Querlenker dient sein aufbauseitiges Lager.

Zwischen dem aufbauseitigen Lagerpunkt des Mc-Pherson-Federbeines und dem Lagerpunkt des Querlenkers am Radträger wird eine Lenkdrehachse gebildet. Diese weist einen Durchstoßpunkt in der Radaufstandsebene und außerhalb der Spurweite auf. Der Durchstoßpunkt dieser Lenkdrehachse ist - in bezug auf die Fahrtrichtung - vor der Radmittenquerebene angeordnet und die Lenkdrehachse kreuzt die Raddrehachse an der Radinnenseite. Es wird durch die Lage der Lenkdrehachse zur vertikalen Radmittenlängsebene ein Hebelarm in Höhe der Raddrehachse gebildet. Bei Antriebskräften wird durch diese Lage der Lenkdrehachse ein Moment in Radmitte bewirkt, wodurch die Spurstange auf Druck und der Querlenker auf Zug beansprucht wird. Entsprechend der definierten Elastizität des aufbauseitigen elastischen Lagers des Querlenkers in radialen Richtungen wird somit bei Antriebskräften das Rad in Richtung Vorspur verstellt.

Bei auf das Rad einwirkenden Bremskräften wird eine Radstellungsänderung in Richtung Vorspur erzielt, wozu einerseits die Lenkdrehachse einen negativen Lenkrollradius aufweist und andererseits die Spurstange - in Ansicht von hinten gesehen - vom Anlenkpunkt am Lenkgetriebe bis zum radträgerseitigen Lager geneigt unter einem Winkel zur Fahrbahn hin verläuft und daß sie gegenüber dem Querlenker kürzer ausgeführt ist. Hierdurch entsteht eine Radstellungsänderung in Richtung Vorspur wenn sich unter Einwirkung von Bremskräften der Nachlautwinkel der Lenkdrehachse verringert

Die Lage der Lenkdrehachse ist derart zum Rad ausgelegt, daß in der Radmitte ein größerer Hebelarm als in der Radaufstandsfläche besteht so daß in Zusammenhang mit den definiert elastischen Lagern am Fahrschemel bzw. am Fahrzeugaufbau sich die Radstellungsänderung in Richtung Vorspur durch die Antriebskräfte einer Radstellungsänderung in Richtung Vorspur durch eine Längsfederung zusätzlich überlagbar ist Damit die Vorspuränderung in Grenzen gehalten wird, ist das aufbauseitige Lager an der Zugstrebe mit einer derartigen Kennlinie versehen, daß die Längsfederung nach vorn in Fahrtrichtung klein bleibt. Hierdurch wird das Geradeauslaufverhalten des Fahrzeugs verbessert.

Der Nachlaufwinkel der Lenkdrehachse kann entsprechend der Verwendung einer Servolenkung oder einer manuellen Lenkung verändert werden. Hierzu wird der obere Lagerpunkt des Federbeines in Fahrtrichtung verstellt, so daß bei einer Servolenkung ein größerer Nachlaufwinkel und bei einer manuellen Lenkung ein kleinerer Nachlaufwinkel einstellbar ist.

Damit eine vereinfachte Lagerhaltung als auch eine Kostenminimierung der Radaufhängung am Fahrzeug erzielt wird, sind die Querlenker, die Radträger und die Lagerung sowie die Zugstreben sowohl für die Vorderachse als auch für die Hinterachse eines Fahrzeugs von gleichen Abmessungen.

Ein Ausführungsbeispiel der Erfindung ist in der Zeichung dargestellt und wird im folgenden näher beschrieben.

Es zeigen:

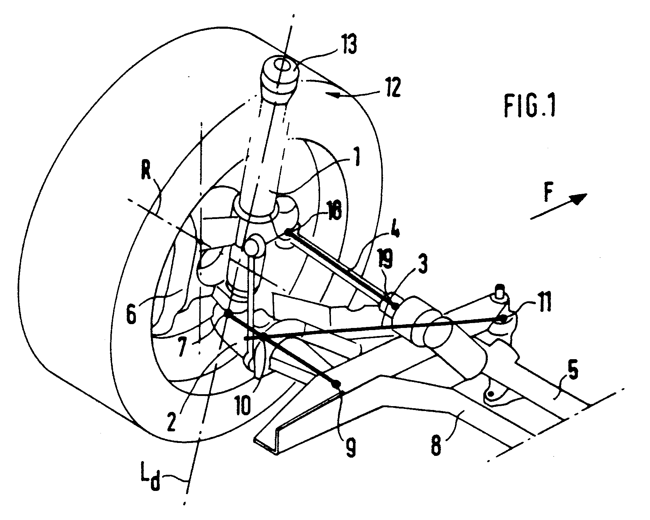

- Fig. 1: eine schaubildliche Darstellung einer Radaufhängung einer Vorderachse,

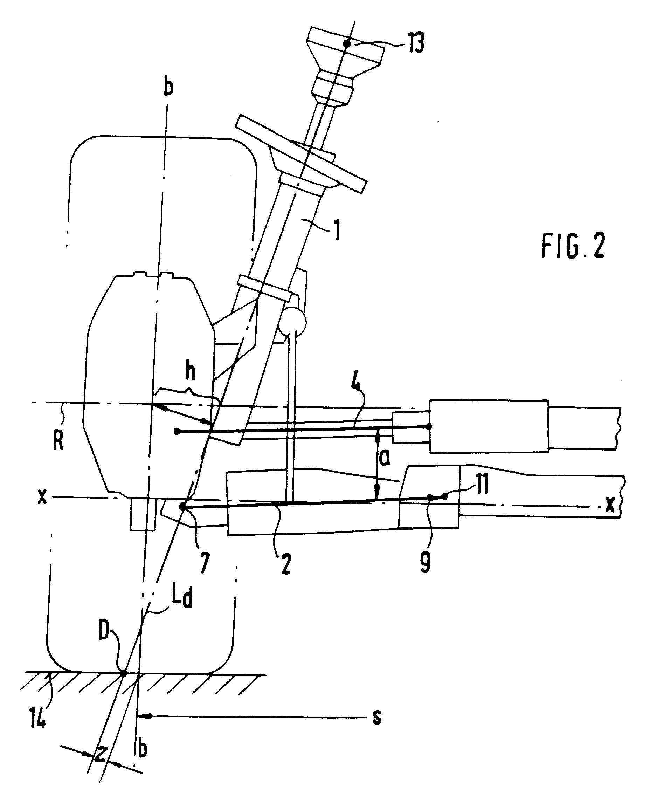

- Fig. 2: eine Vorderansicht der Radaufhängung der Vorderachse,

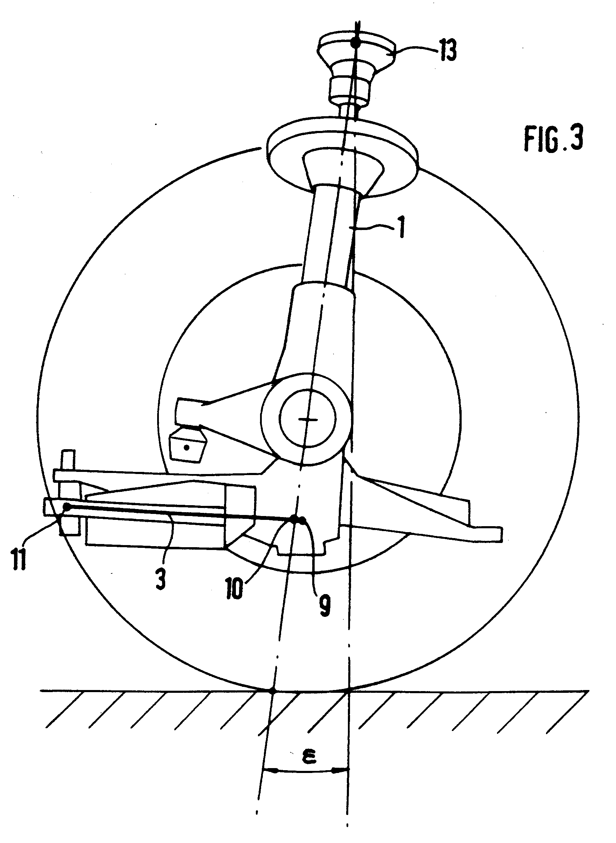

- Fig. 3: eine Seitensicht der Radaufhängung gemäß Fig. 2,

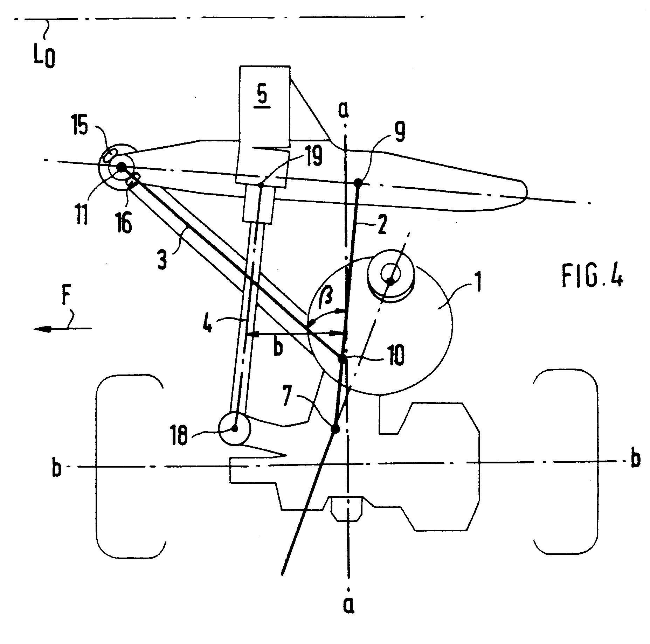

- Fig. 4: eine Draufsicht der Radaufhängung gemäß der Figuren 2 und 3,
- Fig. 5 und 6: eine Darstellung einer Lenkdrehachse an der Vorderachse in Vorder- und Seitenansicht,
- Fig. 7: eine Draufsicht der Radaufhängung mit eingezeichneter Lenkdrehachse im Ruhezustand,
- Fig. 8: eine Draufsicht gemäß Fig. 6 mit in gestrichelten Linien gezeichneter Lage der Lenker unter Einfluß von Bremskräften,
- Fig. 9: eine Vorderansicht der Radaufhängung mit in gestrichelten Linien eingezeichneter Lage der Spurstange unter Einwirkung von Bremskräften,
- Fig. 10 u. 11: eine Seitenansicht der Radaufhängung entsprechend Fig. 9,

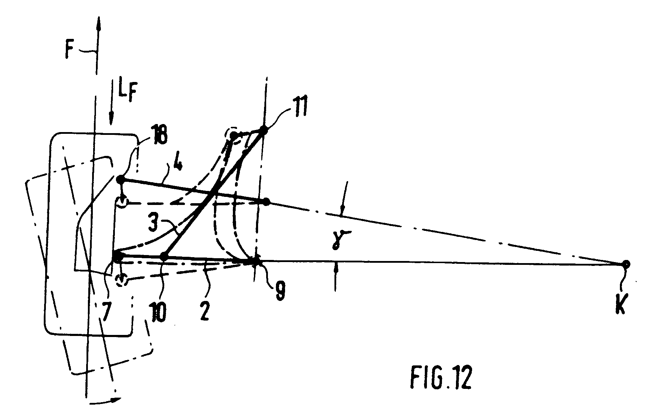

- Fig. 12: eine Draufsicht der Radaufhängung mit dargestelltem Korrekturpol bei Längsfederung,
- Fig. 13: eine Vorderansicht der Radaufhängung mit eingezeichnetem Hebelarm zwischen senkrechter Radmittenlängsebene und Lenkdrehachse in Radmitte,
- Fig. 14: eine Seitenansicht zu Fig 13,
- Fig. 15: eine Draufsicht der Radaufhängung mit in gestrichelten Linien dargestellter Lage der Radaufhängung bei Einwirkung von Antriebskräften auf das Rad,

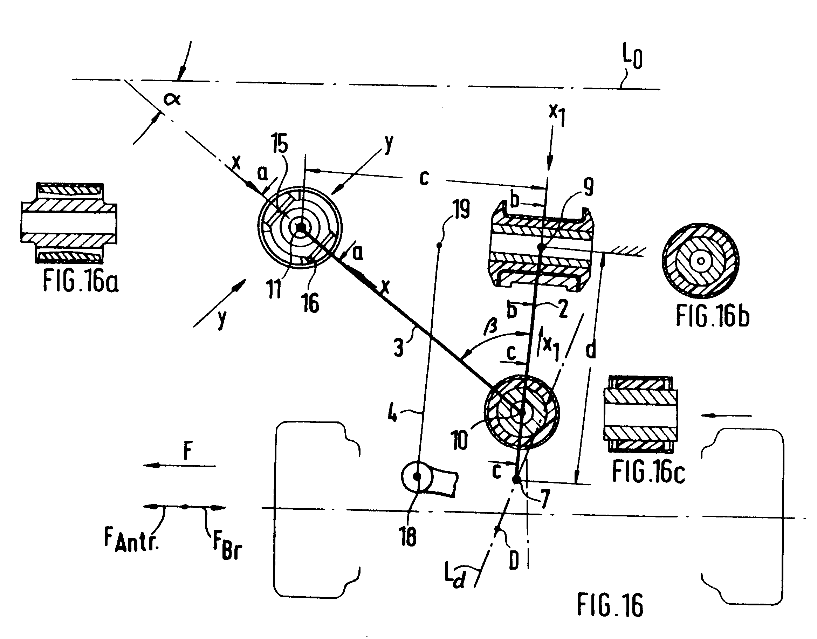

- Fig. 16: eine Draufsicht auf eine schematisierte Radaufhängung mit eingezeichneten elastischen Lagern in Draufsicht und Seitenansicht,
- Fig. 16a: einen Schnitt durch das Lager nach der Linie a-a der Fig. 16,
- Fig. 16b: einen Schnitt durch das Lager nach der Linie b-b der Fig. 16,
- Fig. 16c: einen Schnitt durch das Lager nach der Linie c-c der Fig. 16, und

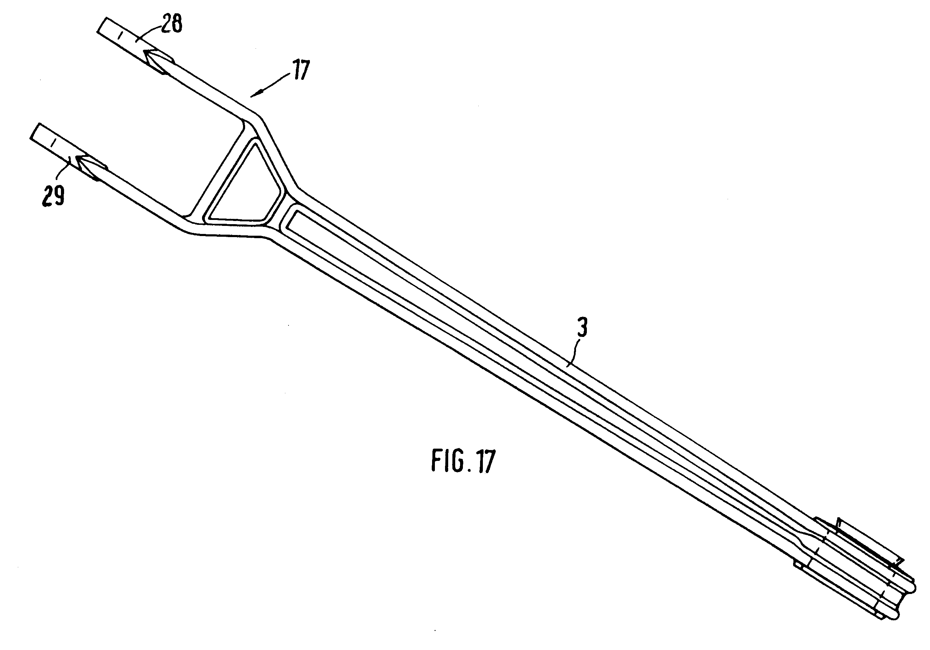

- Fig. 17: eine Zugstrebe in einer Seitenansicht.

Die Radaufhängung für eine Vorder- oder Hinterachse umfaßt einen Querlenker 2 mit schrägangestellter Zugstrebe 3 sowie einem Mc-Pherson-Federbein 1 und einer Spurstange 4 eines Lenkgetriebes 5.

Der Querlenker 2 ist am Radträger 6 über ein Kugelgelenk 7 abgestützt und am Fahrzeugaufbau unter Zwischenschaltung eines Fahrschemels 8 oder Hilfsrahmens in einem elastischen Lager 9 angelenkt. Am Querlenker 2 ist in einem elastischen Lager 10 die Zugstrebe 3 gehalten, welche am Fahrschemel 8 in einem weiteren elastischen Lager 11 befestigt ist.

Der Querlenker 2 und die Zugstrebe 3 sind in einer etwa horizontalen Ebene x-x unterhalb der Raddrehachse R angeordnet. Die Zugstrebe 3 erstreckt sich unter einem spitzen Winkei Beta zum Querlenker 2 entgegen der Fahrtrichtung F, wobei der Querlenker 2 etwa in einer Radmittenquerebene a-a verläuft. Die Spurstange 4 ist - in bezug auf die Fahrtrichtung F - vor dem Querienker 2 und unmittelbar unterhalb der Raddrehachse R angeordnet und weist einen Abstand a zum tieferliegenden Querienker 2 auf, der mit einem seitlichen Abstand b - in bezug auf die Fahrtrichtung F - hinter der Spurstange 4 liegt.

Die elastischen Lager 9, 10 und 11 der Aufhängung sind mit einer solchen definierten elastischen Kennung versehen, daß bei auf das Rad einwirkenden Kräften, wie beispielsweise Antriebs- und Bremskräften sowie Längsstößen eine das Fahrverhalten vorteillg beeinflussende Radstellungsänderung erzielt wird.

Die Länge d der Querstrebe 2 entspricht annähernd dem Abstand c der beiden aufbauseitigen Lager 9 und 11 zueinander, wobei das Lager 10 der Zugstrebe 3 im Querlenker 2 näher zum Gelenk 7 am Radträger 6 als das Lager 9 am Fahrschemel 8 angeordnet ist.

Das Mc-Pherson-Federbein 1 ist mit seinem einen oberen Ende 12 in einem Lager 13 am Fahrzeugaufbau abgestützt. Sein unteres Ende ist am Radträger 6 gehalten. Eine Verbindungslinie zwischen dem oberen Lager 13 und dem Gelenk 7 ergibt eine Lenkdrehachse Ld. Diese weist einen Durchstoßpunkt D in der Radaufstandsebene 14 außerhalb der Spurweite s und - in bezug auf die Fahrtrichtung F - vor der Radmittenquerebene a-a auf. Sie kreuzt die Raddrehachse R an der Radinnenseite und weist einen Abstand (Hebelarm h) zur Radmittenlängsebene b-b auf. Die Lenkdrehachse Ld weist eine solche Anstellung auf, daß sich ein Nachlaufwinkel Eta ergibt.

Die Zugstrebe 3 ist am Fahrschemel 8 in einem stehenden Buchsenlager 11 gehalten, das in seinen Hauptbelastungsrichtungen x in Längsrichtung der Strebe 3 radiale Ausnehmungen 15, 16 aufweist und dadurch in diesen Richtungen weicher ausgeführt ist als in Fahrzeuglängs- und hochrichtung. Das liegende aufbauseitige Buchsenlager 9 des Querlenkers 2 weist in allen Richtungen eine gleiche Elastizität auf und ist insgesamt radial steifer ausgeführt als das Lager 11 der Zugstrebe.

Das Verbindungs-Lager 10 zwischen der Zugstrebe 3 und dem Querlenker 2 ist als stehendes Buchsenlager ausgeführt und läßt eine kardanische Bewegung der Zugstrebe 3 zum Querlenker zu und ist in radialen Richtungen weicher ausgeführt als das Lager 9. Die Zugstrebe 3 weist am zu verbindenden Ende mit dem Lager 10 eine Gabel 17 mit zwei Schenkeln 28, 29 auf, die das stehende Buchsenlager 10 von oben und unten übergreifen.

Zur Radstellungsänderung in Richtung Vorspur bzw. zur Vorspuränderung unter der Einwirkung von Bremskräften, Antriebskräften oder zur Längsfederung sind die Zugstrebe 3 und der Querlenker 2 sowie die Spurstange 4 über ihre Lager 10, 11 und 7, 9 und 18 entsprechend verschwenkbar.

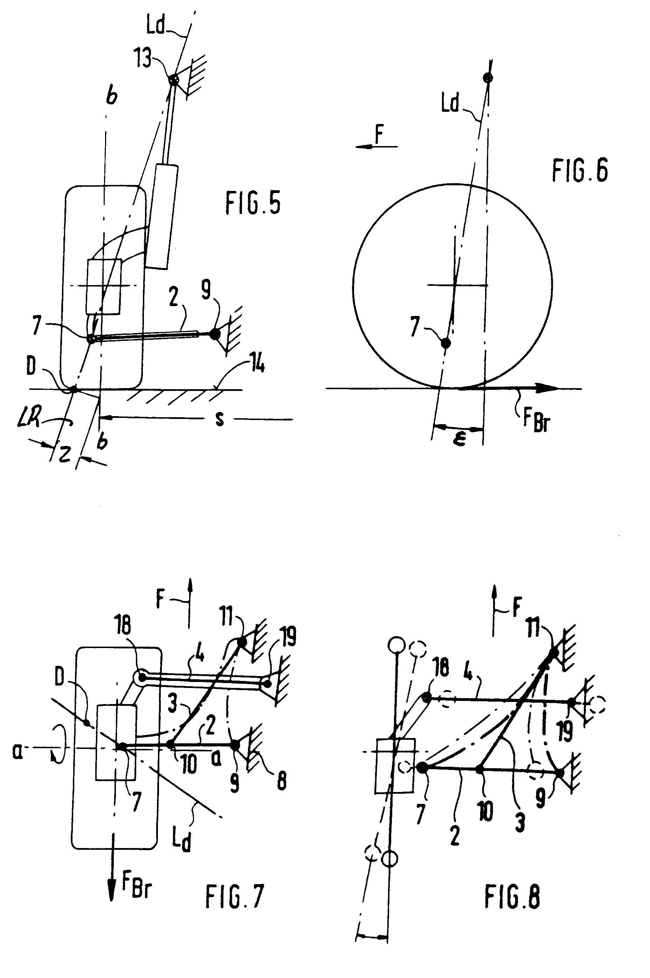

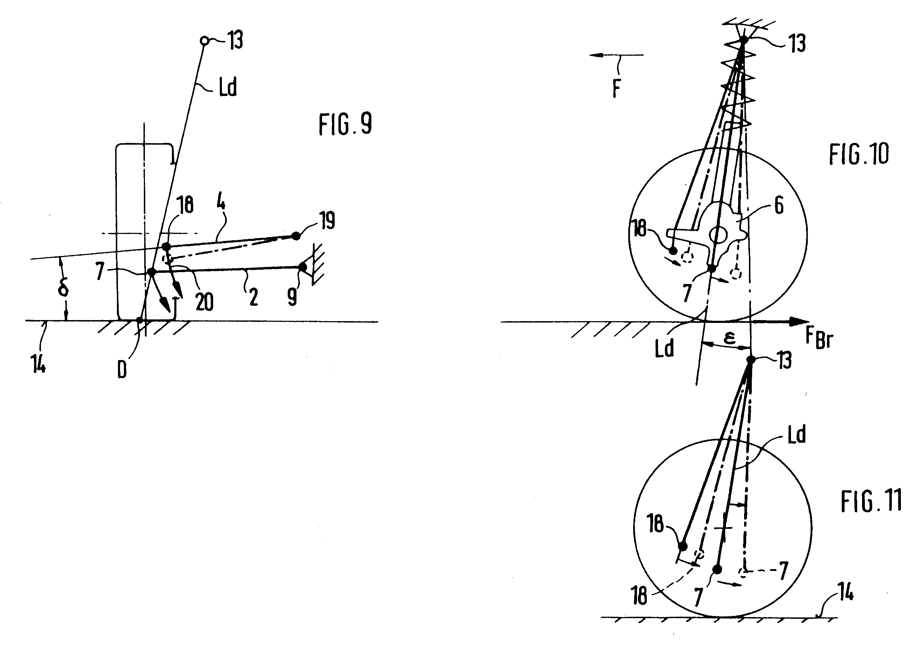

So ist zur Radstellungsänderung in Richtung Vorspur bei Bremskräften F_{Br} , die Spurstange - in Ansicht von hinten gesehen - vom Anlenkpunkt 19 am Lenkgetriebe 5 bis zum Lager 18 am Radträger 6 unter einem Winkel Delta zur Radaufstandsebene 14 angestellt (Fig. 9) Da die Spurstange 4 kürzer ausgeführt ist als der Querlenker 2 wird sich das Lager 18 der Spurstange 4 bei Bremskräften F_{Br} , durch ein Verschwenken des Radträgers 6 und eine hieraus resultierende Reduzierung des Nachlaufwinkels Eta (Fig 11), das Lager 18 in Pfeilrichtung 20 bewegen Diese Nachlaufwinkelreduzierung bewirkt, daß das Lager 18 der Spurstange 4 sich stärker nach unten bewegt als das Gelenk 7. Außerdem bewirkt die Schrägstellung der Spurstange 4 unter dem Winkel Delta (Fig. 9) daß sich das Lager 18 nach innen bewegt und somit das Rad in Vorspur verstellt wird. Zudem wird durch den sich in der Radaufstandsebene 14 gebildeten Hebelarm Z (Fig. 5), welcher dem Lenkrollradius LR entspricht und zwischen der Lenkdrehachse Ld und der senkrechten Radmittenlängsebene b-b sich ein Moment aus F_{Br} x Z bilden. Hierbei wird die Spurstange 4 auf Druck und der Querlenker 2 auf Zug beansprucht, wodurch sich eine Vorspureinstellung des Rades einstellt.

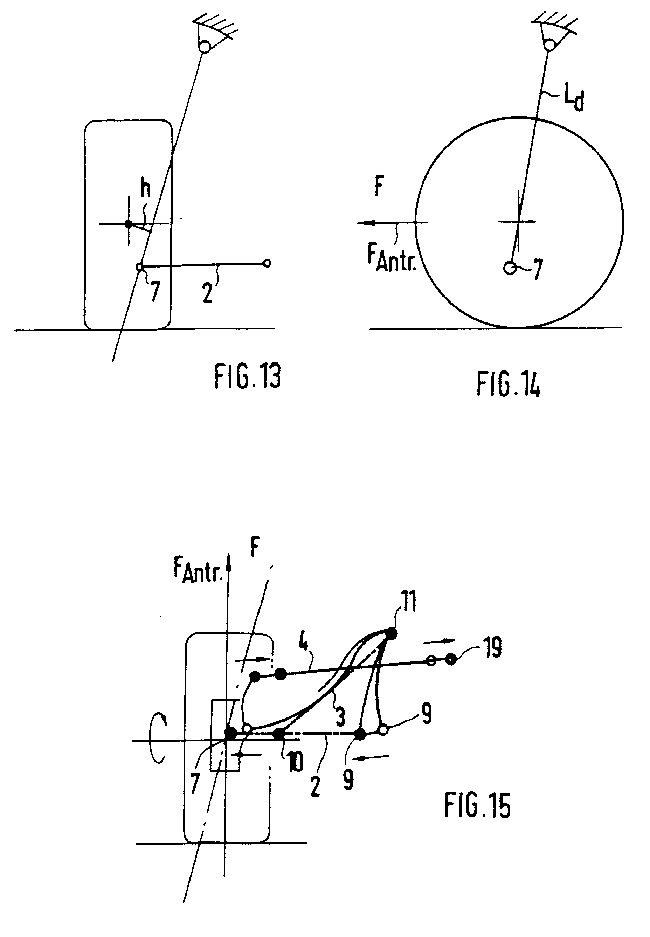

Bei Antriebskräften F_{Antr.} wirkt durch den von der Lenkdrehachse Ld gebildeten Hebelarm h ein Moment F _{Antr.} x h auf das Rad, wodurch eine Vorspureinstellung erzielt wird. Hierbei wird die Spurstange 4 auf Druck und der Querlenker 2 auf Zug beansprucht, was in Fig. 15 näher gezeigt ist.

Wenn das radial weich ausgeführte Lager 11 unter Antriebskratt nachgibt, federt das Rad in Fahrtrichtung F nach vorn und dreht sich dabei um einen Korrekturpol K. Dieser Pol K liegt auf der Innenseite des Rades und wird durch den Schnittpunkt der Richtungen (Erstreckungsrichtung) von Querlenker 2 und Spurstange 4 gebildet. Diese Richtungen laufen unter einem Winkel Gamma nach innen zusammen. Das Lager 9 bildet aufgrund seiner härteren radialen Kennung einen Drehpol für den Querlenker, so daß das Rad eine Verstellung in Richtung Vorspur durchführen kann. Durch diese Verstellung des Rades bei Längsfederung in Richtung Vorspur wird die Vorspur des Rades durch Antriebskräfte überlagert. Damit diese Vorspurgröße begrenzt wird, ist das Lager 11 entsprechend in seiner Bewegung nach vorn begrenzt.

Der obere Lagerpunkt 13 des Mc-Pherson-Federbeines 1 ist an eine Servolenkung und an eine manuelle Lenkung anpaßbar, d.h. das Lager ist in der Weise zu verstellen, daß für eine Servolenkung ein größerer Nachlaufwinkel Eta als bei einer manuellen Lenkung einstellbar ist.

Die Querlenker 2 sowie die Lagerung für die Zugstrebe 3 sind für die Vorder- und Hinterachse baugleich ausgeführt, ebenso auch der Radträger 6 mit seinen Lagerungen. Somit ist der Radträger 6 mit Querlenker 2 des linken Vorderrades gleichzeitig für das rechte Hinterrad verwendbar und entsprechend ist die Verwendung des rechten Vorderrades zum linken Hinterrad auszuführen.
¹ 'Querstrebe' (transverse strut) appears in the German claim rather than the 'Querlenker' (transverse link) used in all the other claims.

## Patentansprüche

1. Radaufhängung für eine Achse eines Kraftfahrzeugs, insbesondere eine Mc-Pherson-Vorderachse, mit einem Querlenker (2) und einer an diesem angelenkten Zugstrebe (3), wobei der Querlenker (2) am Radträger (6) über ein Gelenk (7) gehalten ist und die aufbauseitigen Lager (9, 11) des Querlenkers (2) und der Zugstrebe (3) sowie das Verbindungslager (10) zwischen Querlenker (2) und Zugstrebe (3) mit einer definierten Kennung zur elastokinematischen Verstellung des Rades unter Einwirkung von auf das Rad einwirkenden Umfangskräften ausgeführt sind und der Querlenker (2) mit der über das Verbindungslager (10) verbundenen Zugstrebe (3) in einer etwa horizontalen Ebene (x-x) angeordnet ist und sich unterhalb der Raddrehachse (R) etwa in einer Radmittenquerebene (a-a) erstreckt und die Zugstrebe (3) unter einem Winkel (Alpha) schräg zu einer Längsmittenachse (L₀)des Fahrzeugs verläuft und dieser Querlenker (2) zu einer unterhalb der Raddrehachse (R) und - in bezug auf die Fahrtrichtung (F) - vor dem Querlenker (2) angeordneten Spurstange (4) eines Lenkgetriebes (5) mit einem Abstand (b) in Längsrichtung angeordnet ist und der Querlenker (2) und die Zugstrebe (3) an einem Fahrschemel (8) über jeweils ein elastisches Lager (9, 11) gehalten sind, **dadurch gekennzeichnet**, daß der Querlenker (2) zur Spurstange (4) neben dem Abstand (b) in Längsrichtung auch einen Abstand (a) in Hochrichtung aufweist, wobei wenigstens ein Lager (10 oder 11) in seinen unter einem Winkel zur Längsmittenachse (L₀) angestellten Hauptbelastungsrichtungen (x) weicher ist als in den quer dazu verlaufenden Belastungsrichtungen (y) und das liegende Lager (9) des Querlenkers (2) in Belastungsrichtungen (x₁) steifer ausgeführt ist als das stehende Lager (11) der Zugstrebe (3) und daß das Verbindungs-Lager (10) zwischen Zugstrebe (3) und Querlenker (2) Bewegungen der Zugstrebe (3) und des Querlenkers (2) zuläßt und in radialen Richtungen eine weichere Kennung aufweist als das Lager (9) und daß zwischen einem oberen aufbauseitigen Lagerpunkt (13) des Mc-Pherson-Federbeines (1) und dem Gelenk (7) des Querlenkers (2) am Radträger (6) eine Lenkdrehachse (L_{d}) gebildet ist, die die Raddrehachse (R) an der Radinnenseite kreuzt und einen Hebelarm (h) bis zur vertikalen Radmittenlängsebene (b-b) aufweist und daß von der Lenkdrehachse (L_{d}), die einen in der Radaufstrandsebene (14) und außerhalb der Spurweite(s) liegenden Durchstoßpunkt aufweist, ein positiver Hebelarm (Z) in einer Radaufstandsebene gebildet wird.

2. Radaufhängung nach Anspruch 1, **dadurch gekennzeichnet**, daß die Zugstrebe (3) sich in Fahrtrichtung (F) unter einem spitzen Winkel (Beta) zum Querlenker (2) erstreckt, wobei das Verbindungs-Lager (10) am Querlenker (2) näher zum Radträger (6) als zum Lager (9) am Fahrschemel (8) angeordnet ist und die Basis (c) der beiden Lager (9 und 11) am Fahrschemel (8) etwa der Länge (d) des Querlenkers (2) zwischen seinen beiden Lagern (7 und 9) entspricht.

3. Radaufhängung nach den Ansprüchen 1 oder 2, **dadurch gekennzeichnet**, daß das Verbindungslager (10) in einer Gabel (17) der Zugstrebe (3) gehalten ist, die das Lager (10) von beiden Seiten stirnseitig übergreift und zwischen sich lagernd aufnimmt.

4. Radaufhängung nach Anspruch 1 oder einem der vorhergehenden Ansprüche, **dadurch gekennzeichnet**, daß die Spurstange (4) und der Querlenker (2) - in Draufsicht gesehen - in der Weise zueinander unter einem spitzen Winkel (Gamma) angestellt sind, daß sich an der Radinnenseite eine ideelle Schwenkachse mit einem Korrekturpol (K) ergibt.

5. Radaufhängung nach Anspruch 1 oder einem der vorhergehenden Ansprüche, **dadurch gekennzeichnet**, daß die Lenkdrehachse einen Durchstoßpunkt (D) in der Radaufstandsebene (14) außerhalb der Spurweite (s) und - in bezug auf die Fahrtrichtung (F) - vor der Radmittenquerebene (a-a) aufweist und die Raddrehachse (R) an der Radinnenseite kreuzt.

6. Radaufhängung nach den Ansprüchen 1 und 5, **dadurch gekennzeichnet**, daß das aufbauseitige elastische Lager (9) des Querlenkers (2) zur Erzielung einer Radstellungsänderung eine derartige Kennung in Belastungsrichtung quer zum Fahrzeug aufweist, daß bei Antriebskräften (F_{Antr.}) über den durch die Lenkdrehachse (Ld) gebildeten Hebelarm (h) in Höhe der Radmitte (R) eine elastokinematische Radstellungsänderung in Richtung Vorspur einstellbar ist, wobei der Querlenker (2) auf Zug und die Spurstange (4) auf Druck beanspruchbar ist.

7. Radaufhängung nach Anspruch 1 oder einem der vorhergehenden Ansprüche, **dadurch gekennzeichnet**, daß die Spurstange (4) - in Ansicht von hinten - vom Anlenkpunkt (19) am Lenkgetriebe (5) zum radträgerseitigen Lager (18) zur Radaufstandsebene (14) hin unter einem Winkel (Delta) geneigt verläuft und gegenüber dem Querlenker (2) kürzer ausgeführt ist und unter Einwirkung von Bremskräften (F_{Br}) und/oder Radlaständerungen sich der Nachlaufwinkel (Eta) der Lenkdrehachse (Ld) verringert und eine Radstellungsänderung in Richtung Vorspur einstellbar ist.

8. Radaufhängung nach Anspruch 1 oder einem der vorhergehenden Ansprüche, **dadurch gekennzeichnet**, daß die aufbauseitigen Lager (9, 11) am Fahrschemel (8)der Querlenker-Zugstreben-Aufhängung (2, 3) derart ausgelegt sind, daß mit dem positiven Hebelarm (2) zur Lenkdrehachse (L_{d}) eine Radstellungsänderung in Richtung Vorspur durch die Antriebskräfte (F _{Antr.}) einer Radstellungsänderung in Richtung Vorspur durch eine Längsfederung (L_{F}) überlagerbar ist, wobei das Lager (11) in seiner Bewegung nach vorne in seiner Hauptbelastungsrichtung (X) begrenzt ist.

9. Radaufhängung nach Anspruch 1 oder einem der vorhergehenden Ansprüche, **dadurch gekennzeichnet**, daß zur Erzielung einer Längsfederung (L_{F}) der Aufhängung das aufbauseitige Lager (11) der Zugstrebe (3) in Belastungsrichtung (X) der Strebe (3) weicher ausgebildet ist als das aufbauseitige Lager (9) der Querstrebe (2), derart, daß dieses Lager (2) einen Drehpunkt des Querlenkers (2) und der Korrekturpol (K) einen Schwenkpunkt für das Rad zur Radstellungsänderung entgegen der Fahrtrichtung (F) in Richtung Nachspur bildet (Fig. 12).

10. Radaufhängung nach Anspruch 1 oder einem der vorhergehenden Ansprüche, **dadurch gekennzeichnet**, daß der Nachlaufwinkel (Eta) der Lenkdrehachse (Ld) entsprechend der Verwendung einer Servolenkung oder einer manuellen Lenkung veränderbar ist, wobei der aufbauseitige obere Lagerpunkt (13) des Federbeines (1) in Fahrtrichtung (F) verlagerbar ist und bei einer Servolenkung ein größerer Nachlaufwinkel (Eta) als bei einer manuellen Lenkung einstellbar ist.

11. Radaufhängung nach Anspruch 1 oder einem der vorhergehenden Ansprüche, **dadurch gekennzeichnet**, daß die Querlenker (2), die Radträger (6) und die Zugstrebe (3) sowie Lagerungen am Querlenker (2) und Zugstrebe (3) für die Vorder- und Hinterachse eines Fahrzeugs gleiche Form und Abmessungen aufweisen und als Gleichteile verwendbar sind.

12. Radaufhängung nach Anspruch 1 oder einem der vorhergehenden Ansprüche, **dadurch gekennzeichnet**, daß zwischen der Zugstrebe (3) und dem Querlenker (2) das Lager (11) mit radialen Ausnehmungen angeordnet ist und die Zugstrebe (3) am Fahrzeugaufbau über ein Kugelgelenk gehalten ist.

## Claims

1. A wheel suspension system for an axle of a motor vehicle, more particularly a MacPherson front axle, comprising a transverse link (2) and a tie bar (3) pivotally connected thereto, wherein the transverse link (2) is held on the wheel carrier (6) by way of a joint (7), and the bearings (9, 11) of the transverse link (2) and the tie bar (3) on the body side and also the connecting bearing (10) between the transverse link (2) and the tie bar (3) are designed with a specific characteristic for the elasto-kinematic adjustment of the wheel under the effect of peripheral forces acting on the wheel, and the transverse link (2) with the tie bar (3) attached by way of the connecting bearing (10) is located in an approximately horizontal plane (x-x) and extends underneath the wheel's axis of rotation (R) approximately in a wheel-centre transverse plane (a-a), and the tie bar (3) extends obliquely to a longitudinal centre axis (L₀) of the vehicle at an angle (alpha), and the said transverse link (2) is located at a distance (b) in the longitudinal direction from a track rod (4) of a steering gear (5) located beneath the wheel's axis of rotation (R) and preceding the transverse link (2) with respect to the direction of travel (F), and the transverse link (2) and the tie bar (3) are held on a subframe (8) by way of respective flexible bearings (9, 11), characterised in that the transverse link (2) is also spaced from the track rod (4) by a distance (a) in the vertical direction, as well as by the distance (b) in the longitudinal direction, wherein at least one bearing (10 or 11) is more yielding in its main load directions (x) set at an angle to the longitudinal centre axis (L₀) than in the load directions (y) extending transversely thereto and the horizontal bearing (9) of the transverse link (2) is made more rigid in the load directions (x₁) than the vertical bearing (11) of the tie bar (3), and in that the connecting bearing (10) between the tie bar (3) and the transverse link (2) allows movements of the tie bar (3) and the transverse link (2) and has a more yielding characteristic in the radial directions than the bearing (9), and in that between an upper bearing point (13) of the MacPherson spring strut (1) on the body side and the joint (7) of the transverse link (2) on the wheel carrier (6) a steering axis of rotation (L_{d}) is formed which crosses the wheel's axis of rotation (R) on the inside of the wheel and has a lever arm (h) to the vertical wheel-centre longitudinal plane (b-b), and in that from the steering axis of rotation (L_{d}), which has a point of intersection located in the wheel contact plane (14) and outside the wheel gauge (s), a positive lever arm (Z) is formed in a wheel contact plane.

2. A wheel suspension system according to claim 1, characterised in that the tie bar (3) extends in the direction of travel (F) at an acute angle (beta) to the transverse link (2), wherein the connecting bearing (10) on the transverse link (2) is located closer to the wheel carrier (6) than to the bearing (9) on the subframe (8), and the baseline (c) of the two bearings (9 and 11) on the subframe (8) approximately corresponds to the length (d) of the transverse link (2) between its two bearings (7 and 9).

3. A wheel suspension system according to claims 1 or 2, characterised in that the connecting bearing (10) is held in a fork (17) of the tie bar (3) which engages over the end faces of the bearing (10) from either side and holds it in a supporting manner therebetween.

4. A wheel suspension system according to claim 1 or one of the preceding claims, characterised in that the track rod (4) and the transverse link (2) - seen in plan view - are positioned at an acute angle (gamma) to one another so as to produce an ideal pivot axis with a correction origin (K) on the inside of the wheel.

5. A wheel suspension system according to claim 1 or one of the preceding claims, characterised in that the steering axis of rotation has a point of intersection (D) in the wheel contact plane (14) outside the wheel gauge (s) and preceding the wheel-centre transverse plane (a-a) with respect to the direction of travel (F), and crosses the wheel's axis of rotation (R) on the inside of the wheel.

6. A wheel suspension system according to claims 1 and 5, characterised in that, to achieve a wheel position change, the flexible bearing (9) of the transverse link (2) on the body side has a characteristic in the load direction transversely to the vehicle such that, under driving forces (F_{Antr.}), an elasto-kinematic wheel position change towards toe-in may be set via the lever arm (h) formed by the steering axis of rotation (L_{d}) at the level of the wheel centre (R), wherein the transverse link (2) may be subjected to tension and the track rod (4) to compression.

7. A wheel suspension system according to claim 1 or one of the preceding claims, characterised in that, viewed from the rear, the track rod (4) extends from the articulation point (19) on the steering gear (5) to the bearing (18) on the wheel carrier side at an angle (delta) inclined towards the wheel contact plane (14) and is designed so as to be shorter than the transverse link (2) and, under the effect of braking forces (F_{Br}) and/or wheel load changes, the castor angle (eta) of the steering axis of rotation (L_{d}) decreases and a wheel position change towards toe-in may be set.

8. A wheel suspension system according to claim 1 or one of the preceding claims, characterised in that the bearings (9, 11) on the subframe (8) of the transverse link - tie bar suspension system (2, 3) on the body side are so designed that, with the positive lever arm (Z) to the steering axis of rotation (L_{d}), a wheel position change towards toe-in as a result of the driving forces (F_{Antr.}) of a wheel position change towards toe-in may be overlaid by longitudinal springing (L_{F}), the bearing (11) being limited in its movement forwards in its main load direction (X).

9. A wheel suspension system according to claim 1 or one of the preceding claims, characterised in that, to achieve longitudinal springing (L_{F}) of the suspension system, the bearing (11) of the tie bar (3) on the body side is designed so as to be more yielding in the load direction (X) of the bar (3) than the bearing (9) of the transverse strut (2)¹ on the body side so that this bearing (2) [sic, recte 9] forms a point of rotation of the transverse link (2) and the correction origin (K) forms a pivot point for the wheel for changing the wheel position in the opposite direction to the direction of travel (F) towards toe-out (Fig. 12).

10. A wheel suspension system according to claim 1 or one of the preceding claims, characterised in that the castor angle (eta) of the steering axis of rotation (L_{d}) may be varied according to whether power steering or manual steering is being used, wherein the upper bearing point (13) of the spring strut (1) on the body side is movable in the direction of travel (F) and a greater castor angle (eta) may be set with power steering than with manual steering.

11. A wheel suspension system according to claim 1 or one of the preceding claims, characterised in that the transverse link (2), the wheel carriers (6) and the tie bar (3) and also mountings on the transverse link (2) and the tie bar (3) for the front and rear axle of a vehicle have the same shape and dimensions and may be used as identical parts.

12. A wheel suspension system according to claim 1 or one of the preceding claims, characterised in that the bearing (11) comprising radial recesses is located between the tie bar (3) and the transverse link (2), and the tie bar (3) is held on the vehicle body by way of a ball joint.

## Revendications

1. Suspension de roue pour un essieu d'un véhicule automobile, en particulier d'un essieu avant Mc-Pherson, avec un bras oscillant transversal (2) et un tirant (3), articulé sur celui-ci, le bras oscillant transversal (2) étant maintenu sur le support de roue (6), par une articulation (7) et les paliers (9, 11) côté carrosserie du bras oscillant transversal (2) et du tirant (3) ainsi que le palier de liaison (10) entre le bras oscillant transversal (2) et le tirant (3), étant réalisés avec une caractéristique définie en vue du déplacement élasto-cinématique de la roue, sous l'effet de forces périphériques agissant sur la roue, et le bras oscillant transversal (2) avec le tirant (3), relié par le palier de liaison (10), étant placés dans un plan à peu près horizontal (x-x) et s'étendant au-dessous de l'axe de rotation de roue (R), à peu près dans un plan transversal médian de roue (a-a) et le tirant (3) s'étendant sous un angle (alpha), obliquement par rapport à un axe médian longitudinal (L₀) du véhicule et ce bras oscillant transversal (2) étant disposé, par rapport à une barre d'accouplement (4), située au-dessous de l'axe de rotation de roue (R) et devant - par rapport au sens de marche (F) - le bras oscillant transversal (2), d'un mécanisme de direction (5), à une distance (b) dans la direction longitudinale et le bras oscillant transversal (2) et le tirant (3) étant maintenus sur un faux-châssis (8), chacun par un palier élastique (9, 11), caractérisée en ce que le bras oscillant transversal (2) présente par rapport à la barre d'accouplement (4), outre la distance (b) dans la direction longitudinale, également une distance (a) dans la direction de la hauteur, au moins un palier (10 ou 11) étant plus souple dans ces directions de sollicitation principales (x), inclinées sous un angle par rapport à l'axe médian longitudinal (L₀) que dans les directions de sollicitation (y), s'étendant transversalement à celles-ci et le palier (9) horizontal du bras oscillant transversal (2) étant réalisé plus rigide dans des directions de sollicitation (x₁) que le palier vertical (11) du tirant (3) et en ce que le palier de liaison (10), entre le tirant (3) et le bras oscillant transversal (2), autorise des déplacements du tirant (3) et du bras oscillant transversal (2) et présente, dans des directions radiales, une caractéristique plus souple que le palier (9) et en ce qu'entre un point d'appui (13) supérieur, côté carrosserie, de la jambe de force à ressort Mc-Pherson (1) et l'articulation (7) du bras oscillant transversal (2) sur le support de roue (6), il est formé un axe de rotation de direction (L_{d}) qui coupe l'axe de rotation de la roue (R) sur le côté intérieur de la roue et qui présente un bras de levier (h) jusqu'au plan longitudinal médian de roue vertical (b-b) et en ce que par l'axe de rotation de direction (L_{d}) qui présente dans le plan d'appui (14) de la roue et à l'extérieur de l'écartement des roues (S) un point de percée, un bras de levier (Z) positif est formé dans un plan d'appui de roue.

2. Suspension de roue sel on la revendication 1, caractérisée en ce que le tirant (3) s'étend dans le sens de marche (F), sous un angle aigu (β) par rapport au bras oscillant transversal (2), le palier de liaison (10) étant situé sur le bras oscillant transversal (2) plus près du support de roue (6) que du palier (9) sur le faux-châssis (8) et la base (c) des deux paliers (9 et 11) sur le faux-châssis (8) correspondant à peu près à la longueur (d) du bras oscillant transversal (2), entre ses deux paliers (7 et 8).

3. Suspension de roue selon les revendications 1 ou 2, caractérisée en ce que le palier de liaison (10) est maintenu dans une fourche (17) du tirant (3), qui passe frontalement sur le palier (10) des deux côtés et le loge entre eux en le soutenant.

4. Suspension de roue selon la revendication 1 ou l'une des revendications précédentes, caractérisée en ce que la barre d'accouplement (4) et le bras oscillant transversal (2) - vus de dessus - sont inclinés l'un par rapport à l'autre, sous un angle aigu (gamma), de manière qu'il se forme sur le côté intérieur de la roue un axe de pivotement imaginaire avec un pôle de correction (K).

5. Suspension de roue selon la revendication 1 ou l'une des revendications précédentes, caractérisée en ce que l'axe de rotation de direction présente un point de percée (D) dans le plan d'appui de roue (14), a l'extérieur de l'écartement des roues (s) et devant - par rapport au sens de marche (F) - le plan transversal médian de roue (a-a) et croise l'axe de rotation de roue (R), sur le côté intérieur de la roue.

6. Suspension de roue selon les revendications 1 et 5, caractérisée en ce que le palier élastique (9) côté carrosserie du bras oscillant transversal (2) présente, pour obtenir une variation de la position de la roue, une caractéristique dans la direction de sollicitation, transversalement au véhicule, telle qu'en cas de forces d'entraînement (F_{Antr.}), par le bras de levier (h), formé par l'axe de rotation de direction (L_{d}), à hauteur du milieu de roue (R) une variation de la position de roue élasto-cinématique soit réglable dans le sens d'un pincement, le bras oscillant transversal (2) pouvant être sollicité en traction et la barre d'accouplement (4), en compression.

7. Suspension de roue selon la revendication 1 ou l'une des revendications précédentes caractérisée en ce que la barre d'accouplement (4) - vue de l'arrière - est inclinée à partir du point d'articulation (19) sur le mécanisme de direction (5), avec le palier (18) côté support de roue, vers le plan d'appui de roue (14), sous un angle (delta) et est réalisée plus courte par rapport au bras oscillant transversal (2) et sous l'effet de forces de freinage (F_{Br}) et/ou de variations de la charge de la roue, l'angle de chasse (epsilon) de l'axe de rotation de direction (L_{d}) diminue et une variation de la position de la roue est réglable dans le sens d'un pincement.

8. Suspension de roue selon la revendication 1 ou l'une des revendications précédentes, caractérisée en ce que les paliers (9, 11) côté carrosserie sont conçus sur le faux-châssis (8) de la suspension à bras oscillant transversal et tirant (2, 3), de manière qu'avec le bras de levier positif (2) par rapport à l'axe de rotation de direction (L_{d}), une variation de la position de roue dans le sens d'un pincement par les forces d'entraînement (F_{Antr.}) soit superposable à une variation de la position de la roue dans le sens d'un pincement par une suspension longitudinale (L_{F}), le palier (11) étant limité dans son déplacement vers l'avant dans sa direction de sollicitation principale (X).

9. Suspension de roue selon la revendication 1 ou l'une des revendications précédentes, caractérisée en ce que pour obtenir une suspension longitudinale (L_{F}) de la suspension, le palier (11) côté carrosserie du tirant (3) est plus souple dans la direction de sollicitation (X) du tirant (3) que le palier (9) côté carrosserie du bras oscillant transversal (2), de manière que ce palier (2) forme un point de rotation du bras oscillant transversal (2) et le pôle de correction (K) forme un point de pivotement pour la roue en vue de la variation de la position de roue dans le sens contraire au sens de marche (F), dans le sens d'une ouverture (fig. 12).

10. Suspension de roue selon la revendication 1 ou l'une des revendications précédentes caractérisée en ce que l'angle de chasse (eta) de l'axe de rotation de direction (L_{d}) est variable conformément à l'utilisation d'une direction assistée ou d'une direction manuelle, le point d'appui supérieur (13) côté carrosserie de la jambe de force à ressort (1) étant déplaçable dans le sens de marche (F) et dans le cas d'une direction assistée, un plus grand angle de chasse (eta) pouvant être réglé que dans le cas d'une direction manuelle.

11. Suspension de roue selon la revendication 1 ou l'une des revendications précédentes, caractérisée en ce que les bras oscillants transversaux (2), les supports de roue (6) et le tirant (3) ainsi que des paliers sur le bras oscillant transversal (2) et le tirant (3) pour l'essieu avant et l'essieu arrière d'un véhicule présentent la même forme et les mêmes dimensions et peuvent être utilisés comme des éléments équivalents.

12. Suspension de roue selon la revendication 1 ou l'une des revendications précédentes, caractérisée en ce qu'entre le tirant (3) et le bras oscillant transversal (2), le palier (11) est placé avec des évidements radiaux et le tirant (3) est maintenu sur la carrosserie du véhicule par une articulation sphérique.
